# FASCICULE DE BREVET EUROPEEN

(11) **EP 3 189 266 B1**
(45) Date de publication et mention de la délivrance du brevet: **27.11.2019**
(21) Numéro de dépôt: 15757250.4
(22) Date de dépôt: 01.09.2015
(51) Int. Cl.: G21C 17/017, G21C 19/20, F16L 55/18, G01N 29/14, G01N 29/22

(54) **ENSEMBLE D'INTERVENTION SUR LA SURFACE EXTERNE D'UN TUBE, ET PROCÉDÉ CORRESPONDANT**
ANORDNUNG ZUR EINWIRKUNG AUF DIE ÄUSSERE OBERFLÄCHE EINES ROHRES UND ENTSPRECHENDES VERFAHREN
ASSEMBLY FOR ACTING ON THE OUTER SURFACE OF A TUBE, AND CORRESPONDING METHOD

(30) Priorité: 03.09.2014 FR 1458232
(43) Date de publication de la demande: 12.07.2017
(73) Titulaire: FRAMATOME, 92400 Courbevoie (FR)
(72) Inventeur: FUTIN, Emmanuel, F-71530 Crissey (FR); BERNE, Olivier, F-71380 Saint-Marcel (FR); GRYPCZYNSKI, Daniel, F-69006 Lyon (FR)
(74) Mandataire: Lavoix
(86) Numéro de dépôt international: PCT/EP2015/069887
(87) Numéro de publication internationale: WO 2016/034550

(56) Documents cités:
- FR-A1- 2 780 907
- KR-A- 20130 008 839
- US-A- 1 594 518
- US-A1- 2010 275 694

## Description

L'invention concerne en générale les interventions sur les surfaces externes de tubes, notamment dans des zones difficilement accessibles d'un réacteur nucléaire.

Plus précisément, l'invention concerne selon un premier aspect un ensemble prévu pour réaliser des interventions sur une surface externe d'un tube, l'ensemble étant du type comprenant :
- un porteur mobile le long du tube ;
- au moins un outil d'inspection ou de maintenance, lié au porteur ;
le porteur comprenant :
- au moins un organe de roulement, placé en contact avec la surface externe du tube ;
- un actionneur, agencé pour entraîner l'organe de roulement en rotation par rapport au tube, de manière à propulser le porteur le long du tube par coopération entre l'organe de roulement et la surface externe du tube.

FR 1448295 décrit un ensemble de ce type. Le porteur est supporté par un axe monté le long du tube, de manière à pourvoir déplacer le chariot et contrôler les différentes parties du tube. Les documents US1594518, US2010/275694 et KR20130008839 décrivent des autres ensembles de l'art antérieure prévus pour réaliser des interventions sur une surface externe d'un tube.

Un tel ensemble est complexe à mettre en œuvre.

Dans ce contexte, l'invention vise à proposer un ensemble qui soit plus simple d'utilisation.

A cette fin, l'invention porte sur un ensemble selon la revendication 1, où le porteur comprend en outre un dispositif de liaison du porteur au tube, agencé pour que le tube reprenne au moins 50% du poids du porteur et de l'outil.

Ainsi, le porteur de l'ensemble d'intervention est supporté par le tube à inspecter, et progresse le long de ce tube par le biais d'organes de roulement coopérant avec la surface externe du tube. Il n'est donc pas nécessaire que l'ensemble comporte une structure extérieure permettant de guider ou de supporter le porteur.

Par ailleurs, du fait que le porteur est supporté par le tube à inspecter, il suit naturellement le trajet de ce tube. Le guidage du porteur le long du tube est donc considérablement simplifié, surtout quand le tube présente des sections arquées.

L'ensemble peut également présenter une ou plusieurs des caractéristiques ci-dessous considérées individuellement ou selon toutes les combinaisons techniquement possibles :
- le porteur comprend un châssis auquel est lié le ou chaque organe de roulement, le dispositif de liaison du porteur au tube comprenant au moins un galet lié au châssis, disposé de manière à pincer le tube entre le ou chaque galet et le ou chaque organe de roulement avec une force prédéterminée ;
- le ou chaque organe de roulement a un revêtement antidérapant, ledit revêtement antidérapant, ladite force prédéterminée et un couple moteur maximal susceptible d'être transmis par l'actionneur au ou à chaque organe de roulement étant choisis pour que le porteur et l'outil puissent être maintenus immobiles autour d'un tronçon de tube d'orientation verticale ;
- le dispositif de liaison du porteur au tube comporte au moins une mâchoire portant au moins le ou un des galets, et une liaison de la mâchoire au châssis agencée pour que la mâchoire soit mobile entre une position ouverte dans laquelle le porteur est susceptible d'être séparé du tube, et une position fermée dans laquelle le tube est pincé entre le ou chaque galet et le ou chaque organe de roulement ;
- le porteur comprend un codeur adapté pour déterminer une position courante du porteur le long du tube ;
- l'ensemble comprend une liaison adaptée pour lier le porteur au ou à chaque outil, ladite liaison conférant au moins un degré de liberté au ou à chaque outil par rapport au porteur ;
- l'un des outils est un outil de brossage comportant au moins une brosse agencée pour brosser la surface externe du tube ;
- l'outil de brossage comporte plusieurs brosses ayant des formes de demi-anneau, diamétralement opposées les unes aux autres par rapport au tube ;
- l'un des outils est un outil d'inspection comportant au moins une caméra, agencée pour inspecter la surface externe du tube ;
- l'outil d'inspection comporte un dispositif de marquage de la surface externe ;
- selon l'invention, l'un des outils est un outil d'usinage qui comporte au moins un dispositif d'usinage susceptible d'usiner la surface externe du tube, de préférence deux dispositifs d'usinage diamétralement opposés par rapport au tube ;
- l'outil d'usinage comporte :
   - un cadre ;
   - une pluralité de galets de guidage liés au cadre, agencés pour coopérer avec le tube de telle sorte que l'outil d'usinage soit supporté par le tube et soit susceptible de se déplacer le long du tube ;
   - un chariot portant le ou chaque dispositif d'usinage ;
   - une liaison du chariot au cadre, agencée pour que le chariot soit mobile par rapport au cadre en translation le long du tube et en rotation autour du tube ;
- l'outil d'usinage comporte des liaisons des galets au cadre, au moins certaines liaisons étant susceptibles de déplacer les galets entre des positions respectives écartées du tube, et des positions respectives en contact avec la surface externe du tube ;
- le ou chaque dispositif d'usinage comporte un organe d'usinage et une liaison du dispositif d'usinage au chariot susceptible de faire basculer l'organe d'usinage par rapport au chariot dans un plan perpendiculaire au tube de manière mettre en contact l'organe d'usinage avec la surface externe du tube ; et
- l'outil d'usinage comporte au moins une pince susceptible de verrouiller de manière réversible l'outil d'usinage en position sur le tube.

Selon un second aspect, défini dans la revendication 14, l'invention porte sur un procédé d'intervention sur une surface externe d'un tube à l'aide d'un ensemble ayant les caractéristiques ci-dessus, le procédé comprenant au moins les étapes suivantes :
- mise en place sur le tube du porteur et de l'outil lié au porteur ;
- déplacement du porteur et de l'outil le long du tube ;
- réalisation d'au moins une opération d'inspection ou de maintenance sur la surface externe du tube avec l'outil.

Le procédé peut en outre comprendre une ou plusieurs des étapes suivantes :
- brossage de la surface externe du tube à l'aide d'un outil de brossage lié au porteur ;
- inspection de la surface externe du tube à l'aide d'un outil d'inspection lié au porteur ;
- marquage de la surface externe du tube à l'aide d'un outil d'inspection lié au porteur ;
- usinage de la surface externe du tube à l'aide d'un outil d'usinage lié au porteur.

D'autres caractéristiques et avantages de l'invention ressortiront de la description détaillée qui en est donnée ci-dessous, à titre indicatif, et nullement limitatif, en référence aux figures annexées, parmi lesquelles :
- la figure 1 est une représentation schématique simplifiée d'une cuve de réacteur nucléaire de type PWR, et de tubes de guidage de sondes du système RIC, l'ensemble d'intervention de l'invention étant représenté monté sur l'un des tubes ;
- la figure 2 est une vue en perspective, agrandie, du porteur de l'ensemble de l'invention en place sur l'un des tubes guides ;
- la figure 3 est une vue en perspective, éclatée, du porteur de l'ensemble d'intervention des figures 1 et 2 ;
- la figure 4 est une vue en perspective du porteur à l'état assemblé,
- la figure 5 est une vue en perspective d'un outil de brossage ;
- la figure 6 est une vue éclatée, en perspective de l'outil de brossage de la figure 5;
- la figure 7 est une vue en perspective d'un outil d'inspection monté sur le porteur des figures 3 et 4 ;
- la figure 8 est une vue en perspective d'un outil d'usinage ; et
- la figure 9 est une vue en perspective de l'outil d'usinage de la figure 8, coupé dans un plan longitudinal médian.

L'ensemble représenté sur les figures est prévu pour réaliser des interventions sur les surfaces externes de tubes, dans des zones difficilement accessibles où des interventions manuelles ne peuvent pratiquement pas être réalisées. Typiquement, l'ensemble est prévu pour réaliser des interventions d'inspection et/ou de maintenance sur des tubes de réacteur nucléaire situés dans un environnement hostile, où le débit de dose est très élevé. Ces interventions visent notamment à restaurer des tubes 1 dont les surfaces externes 2 sont endommagées.

Par exemple, les tubes sont les tubes de guidage des sondes du système RIC (Réacteur Instrumentation interne du Cœur).

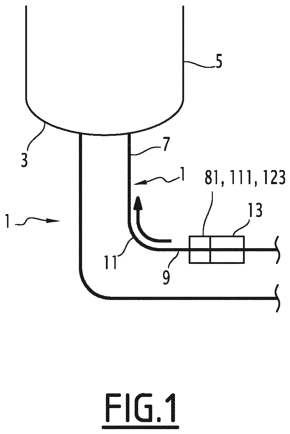

Comme illustré sur la figure 1, les tubes de guidage 1 du système RIC traversent le fond 3 de la cuve 5 du réacteur. Ils permettent l'introduction à l'intérieur de la cuve 5 de sondes, notamment de sondes de mesure du flux neutronique. Les tubes 1 comportent chacun une partie sensiblement verticale 7 et au moins une partie sensiblement horizontale 9, raccordées l'une à l'autre par un tronçon coudé 11.

Les parties des tubes 1 situées immédiatement sous le fond 3 sont situées dans un environnement où le débit de dose est très élevé, rendant les interventions manuelles difficiles.

L'ensemble d'intervention de l'invention permet de réaliser des opérations d'inspection et/ou de maintenance sur la surface externe 2 des tubes de guidage 1, par exemple quand ces surfaces sont corrodées ou endommagées pour toute autre raison.

Toutefois, l'ensemble d'intervention 1 est susceptible d'être utilisé pour la maintenance de toute sorte de tube, à l'intérieur d'un réacteur nucléaire, ou dans un autre type d'installation nucléaire, ou même dans une installation non nucléaire. Il permet de réaliser des interventions dans un mode de travail essentiellement automatisé, avec des interventions humaines très limitées.

Dans la description qui va suivre, on entend par direction longitudinale la direction de l'axe central du tube.

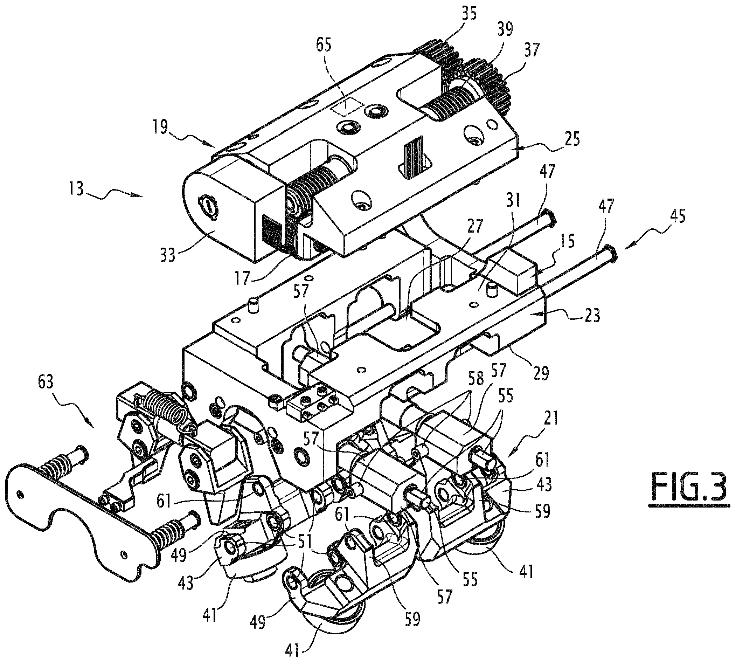

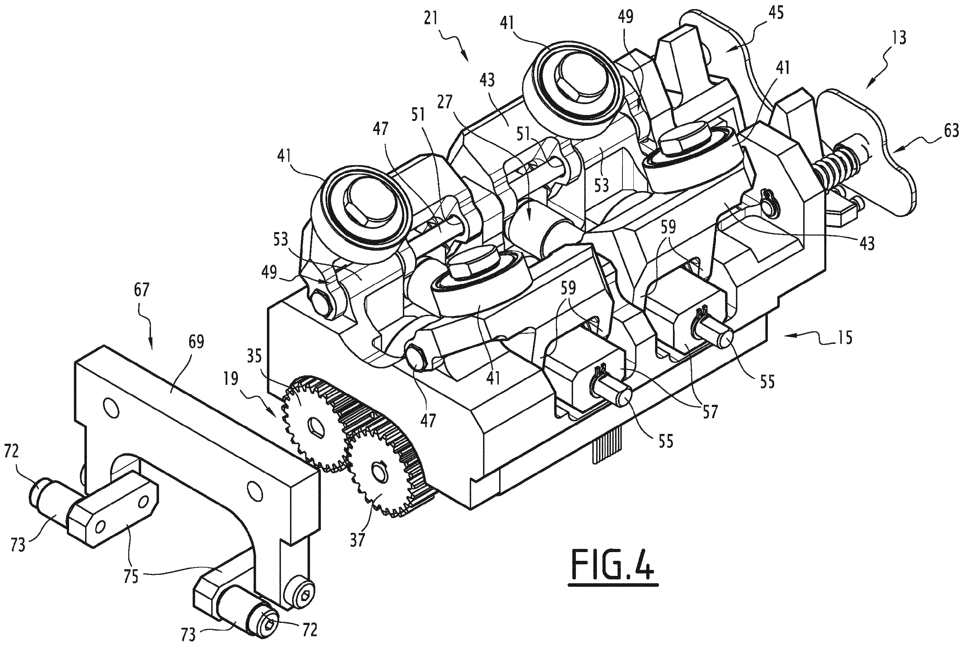

L'ensemble d'intervention comporte un porteur 13 mobile le long du tube, représenté sur les figures 3 et 4, et au moins un outil d'inspection ou de maintenance de la surface externe du tube, lié au porteur 13.

Typiquement, l'ensemble comporte plusieurs outils, permettant de réaliser différents types d'opération sur la surface externe du tube : brossage, inspection vidéo, marquage des zones à traiter, affouillement - c'est-à-dire usinage - des zones endommagées de la surface externe du tube.

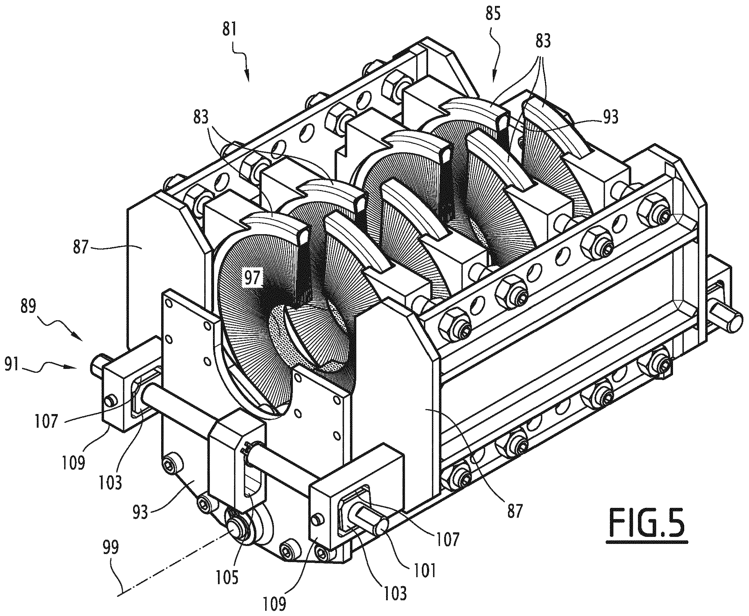

Ces différents outils sont représentés sur les figures 5 à 9. Ils peuvent être montés sur le même porteur, l'un après l'autre.

Comme visible sur les figures 3 et 4, le porteur 13 comprend :
- un châssis 15 ;
- au moins un organe de roulement 17 lié au châssis 15, placé en contact avec la surface externe 2 du tube 1 ;
- un actionneur 19, agencé pour entrainer l'organe de roulement 17 en rotation par rapport au tube, de manière à propulser le porteur le long du tube par coopération entre l'organe de roulement 17 et la surface externe 2 du tube 1 ;
- un dispositif 21 de liaison du porteur 13 au tube 1.

Typiquement, le porteur 13 comporte deux organes de roulement 17. Ces organes de roulement sont par exemple des galets. Ils sont rotatifs autour d'axes respectifs transversaux, perpendiculaires à l'axe central longitudinal du tube 1.

Le châssis 15, comme visible sur la figure 3, comporte deux parties assemblées de manière démontables l'une à l'autre, un cadre 23 et un fond 25. Le cadre 23 délimite intérieurement un volume creux 27, dans lequel sont logés les organes de roulement 17.

Le fond 25 porte les organes de roulement 17 et l'actionneur 19.

Le cadre 23 est délimité par des première et seconde grandes faces 29 et 31 opposées l'une à l'autre. Le volume 27 traverse entièrement le cadre 23, et débouche au niveau des deux grandes faces 29 et 31. Le fond 25 est rapporté sur la seconde grande face 31 et obture le volume 27 au niveau de cette seconde grande face 31.

L'actionneur 19 comporte un moteur 33 dont l'arbre de sortie entraine en rotation un pignon 35. L'actionneur 19 comporte encore une roue dentée 37 engrenant le pignon 35, rigidement fixé à une vis 39. La vis 39 est liée au châssis 15. Plus précisément, elle est liée au fond 25. La vis 39 entraine en rotation le ou les organes de roulement 17.

Le dispositif 21 de liaison du porteur 13 au tube est agencé pour que le tube 1 reprenne au moins 50 % du poids du porteur et de l'outil lié au porteur, quand ceux-ci sont montés sur le tube. Typiquement, le tube 1 reprend 100 % du poids du porteur et de l'outil.

Le dispositif de liaison 21 comporte au moins un galet 41 lié au châssis 15, disposé de manière à pincer le tube entre le ou chaque galet 41 et le ou chaque organe de roulement 17, avec une force prédéterminée.

Dans l'exemple représenté, le dispositif de liaison 21 comporte quatre galets 41. En variante, le dispositif de liaison 21 peut comporter moins de quatre galets, par exemple un galet, deux galets ou trois galets, ou plus de quatre galets.

Comme visible sur la figure 3, le dispositif de liaison 21 comporte une ou plusieurs mâchoire 43, portant chacune au moins un galet 41.

Dans l'exemple représenté, le dispositif de liaison 21 comporte deux mâchoires mobiles 43, portant chacune deux galets 41.

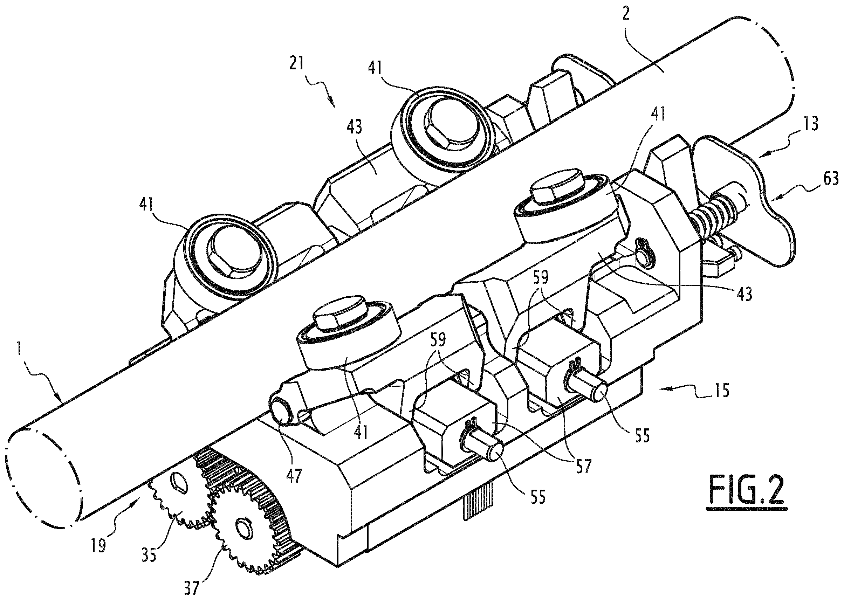

Le dispositif 21 de liaison du porteur ou tube comporte encore une liaison 45 de chaque mâchoire 43 au châssis 15, agencée que pour la mâchoire 43 soit mobile entre une position ouverte dans laquelle le porteur est susceptible d'être séparé du tube, et une position fermée dans laquelle le tube est pincé entre le ou chaque galet 41 porté par la mâchoire et le ou les organes de roulement 17 (figure 2).

La liaison 45 comporte, pour chaque mâchoire 43, un axe 47. La mâchoire 43 est ainsi liée de manière pivotante au cadre 15 autour de l'axe 47. L'axe est d'orientation longitudinale.

Comme visible sur la figure 3, la mâchoire 43 comporte plusieurs chapes 49, percées d'orifices 51 à travers lequel l'axe 47 est engagé. L'axe 47 est fixé au cadre 23 par des massifs 53 percés de passages longitudinaux dans lesquels l'axe 47 est engagé. Les massifs 53 sont venus de matière avec le cadre 23 (figure 4).

Dans l'exemple représenté, les mâchoires 43 sont montées sur la première grande face 29 du cadre, et sont disposées transversalement de part et d'autre du volume 27.

La liaison 45 comporte encore deux vis transversales 55, et sur chaque vis 55, deux blocs 57 déplaçables le long de la vis correspondante.

Chaque bloc 57 présente un passage interne taraudé, dans lequel est engagé le fût fileté de la vis 55.

Comme visible sur la figure 3, chaque bloc 57 comporte deux bouts d'axe 58 alignés longitudinalement l'un avec l'autre, et faisant saillie de part et d'autre du bloc 57. Chaque mâchoire 43 comporte quant à elle deux chapes 59, ayant des orifices 61. Chaque chape 59 est placée à cheval autour d'un bloc 57, les bouts d'axe 58 étant engagés libres en rotation dans les orifices 61.

Par ailleurs, un ressort de compression non représenté est interposé entre chaque bloc 57 et un épaulement ménagé sur la vis correspondante. Le ressort sollicite le bloc 57 vers l'extrémité de la vis, c'est-à-dire dans le sens d'un éloignement par rapport à l'autre bloc 57 monté sur la même vis.

Les vis 55 et les blocs 57 sont interposés entre la première grande face 29 et les mâchoires 43.

La liaison 45 est agencée de telle sorte que, quand les vis 55 sont entrainées en rotation dans un premier sens, les blocs 57 sont déplacés transversalement l'un vers l'autre ce qui provoque le déplacement des mâchoires 43 vers leurs positions ouvertes respectives. A l'inverse, quand les vis 55 sont entrainées en rotation en sens opposé, les blocs 57 sont déplacés le long des vis 55 dans le sens d'un écartement croissant des deux blocs, ce qui entraine les mâchoires 43 vers leurs positions fermées respectives.

Le ou les organes de roulement 17 sont revêtus d'un revêtement antidérapant. Ceci permet d'accroître l'adhérence de l'organe de roulement et du tube.

Selon un aspect avantageux de l'invention, le revêtement antidérapant, la force prédéterminée avec laquelle le tube 1 est pincé entre le ou les galets 41 et le ou chaque organe de roulement 17, et le couple moteur maximal susceptible d'être transmis par l'actionneur 19 aux organes de roulement 17, sont choisis pour que le porteur et l'outil puissent être maintenus immobiles autour d'un tronçon de tube d'orientation verticale, tel que le tronçon de tube 7 représenté sur la figure 1.

Ceci permet d'intervenir en tout point du tube, sur des tronçons horizontaux, verticaux ou ayant n'importe quelle orientation.

Comme visible notamment sur la figure 2, le porteur est prévu pour être monté autour du tube de telle sorte que les organes de roulement 17 soient placés verticalement sous le tube, et les galets 41 au-dessus du tube, dans le cas où le tube 1 est sensiblement horizontal.

Ainsi, les organes de roulement 17 et les galets 41 sont disposés diamétralement à l'opposé des uns des autres par rapport au tube 1.

Comme visible sur la figure 3, le porteur comporte encore un détecteur de fin de course 63, monté à une extrémité longitudinale du châssis 15.

Ce détecteur 63 permet d'arrêter automatiquement le déplacement du porteur quand celui-ci arrive en butée à une extrémité du tube.

Le porteur comporte encore un codeur 65 (figure 3), adapté pour déterminer la position courante du porteur le long du tube. Ainsi, la position du porteur le long du tube, notamment par rapport à une butée fixe située à une extrémité du tube, est parfaitement connue pendant tout son déplacement sur le tube grâce à l'information donnée par le codeur embarqué sur le porteur. Ceci permet ainsi de revenir si besoin plusieurs fois de suite à une position donnée sur le tube, pour effectuer les différentes opérations nécessaires à la restauration de la surface externe du tube.

L'ensemble de l'invention comporte une liaison 67 prévue pour lier le porteur 13 à chacun des outils. Ainsi, la même liaison 67 permet de lier chacun des outils au porteur.

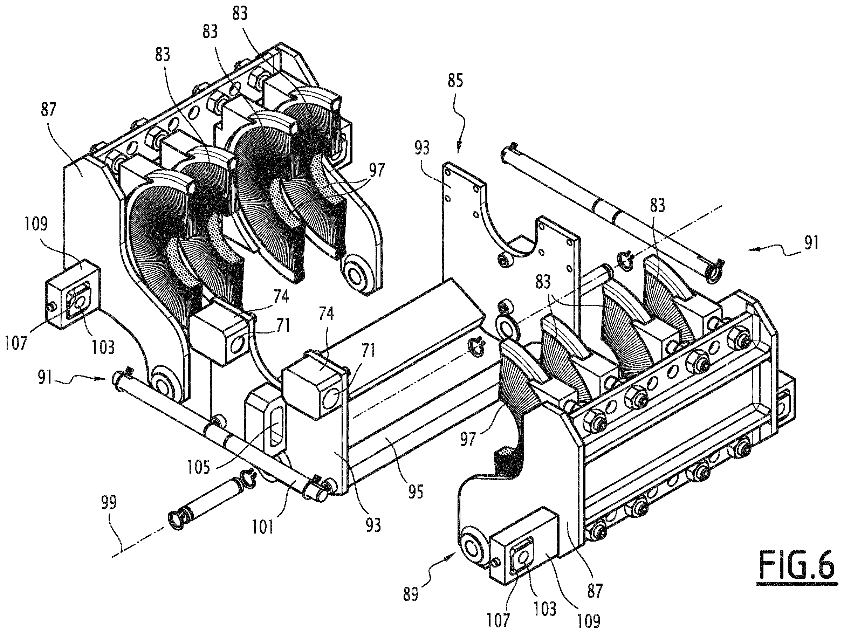

Comme visible sur la Figure 4, la liaison 67 comporte une platine 69 rigidement fixée au porteur 13, au moins un logement 71 lié à l'outil (voir par exemple figure 6), au moins un axe 72 lié à la platine 69 et engagé dans le ou un logement 71, et au moins un manchon élastique 73, interposé entre l'axe 72 et le logement 71.

La platine 69 est rigidement fixée au châssis 15 du porteur, de préférence à une extrémité longitudinale de celui-ci opposée au détecteur de fin de course 63.

Dans l'exemple représenté, la liaison comprend deux logements 71. Ils sont ménagés dans des blocs 74, fixés à l'outil.

Le ou les axes 72 sont d'orientation transversale, comme le ou les logements 71. Ils sont rigidement fixés à la platine par des entretoises 75.

Le ou les manchons élastiques 73 sont enfilés autour du ou des axes 72. Ils sont en polyuréthane, ou en caoutchouc ou en tout autre matériau adapté.

Chaque manchon 73 est adhérisé par une face radialement interne à l'axe 72, et par une face radialement externe à la paroi périphérique du logement 71.

La liaison 67 entre le porteur et l'outil présente, du fait de la présence du ou des manchons, une souplesse suffisante pour permettre à l'outil d'adopter un angle par rapport au porteur. Ceci permet à l'ensemble porteur/outil de suivre les tronçons en courbe du tube 1.

Un outil de brossage 81 est représenté sur les figures 5 et 6. L'outil de brossage 81 comporte au moins une brosse 83 agencée pour brosser la surface externe 2 du tube.

Dans l'exemple représenté, l'outil de brossage 81 porte plusieurs brosses 83, ayant des formes de demi-anneaux, diamétralement opposé les unes aux autres par rapport au tube 1.

Plus précisément, l'outil de brossage 81 comporte un cadre central 85, deux cadres latéraux 87 portant les brosses 83, et une liaison 89 des cadres latéraux 87 au cadre central 85.

Le cadre central 85 comporte deux platines d'extrémités 93 situées aux deux extrémités longitudinales de l'outil, raccordé entre elles par un profilé longitudinal 95.

Chaque cadre latéral 87 comporte un squelette 96, sur lequel sont montées les brosses 83.

Les brosses 83 sont disposées les unes à côté des autres, régulièrement espacées longitudinalement. Les brosses 83 liées à un même cadre latéral sont placés dans des plans respectifs perpendiculaires à la direction longitudinale, parallèles les uns aux autres. Chaque brosse 83 est délimitée vers le tube par un bord en demi-cercle 97, correspondant à l'extrémité des poils de brosse, prévu pour venir porter contre le tube.

La liaison des cadres latéraux 87 au cadre central 85 est une liaison pivot autour d'un axe longitudinal 99 matérialisé par un trait mixte sur la figure 6.

Les cadres latéraux 87 sont ainsi mobiles par rapport au cadre central 85 entre des positions d'utilisation respectives, illustrés sur la figure 5 et des positions basculées à l'écart du tube. Dans la position d'utilisation, les brosses 83 sont en contact par leurs bords internes 87 avec la surface externe du tube, avec une pression prédéterminée.

En utilisation, l'outil est disposé de telle sorte que le cadre central soit placé sous le tube, et les deux cadres latéraux 87 de part et d'autre du tube, de telle sorte que les brosses 83 liées aux deux cadres latéraux puissent brosser la totalité de la circonférence du tube.

Il est ainsi possible de brosser toute la surface extérieure du tube, sous l'effet du déplacement en translation de l'outil le long du tube.

Dans leurs positions basculées, les deux cadres latéraux 87 sont écartés l'un de l'autre, et sont écartés du tube. Le bord interne 97 des brosses n'est plus en contact avec le tube.

Il est à noter que les brosses 83 situées aux extrémités longitudinales de l'outil sont plus souples que les brosses 83 situées au centre de l'outil. Ceci permet un brossage plus efficace de la surface externe du tube, et une meilleure finition de surface.

L'outil de brossage 81 comprend encore un mécanisme 91 de verrouillage des cadres latéraux 87 en position d'utilisation par rapport au cadre central 85.

Le mécanisme de verrouillage 91 comporte une vis 101 d'orientation transversale, et deux écrous 103 liés chacun à un cadre latéral 87. Des orifices taraudés respectifs des deux écrous 103 sont sensiblement alignés transversalement.

Le cadre fixe 85 porte par ailleurs un trou oblong 105 d'orientation verticale, dans lequel est engagé une partie centrale de la vis 101. La vis 101 présente des extrémités transversales opposées filetées, coopérant avec les écrous 103.

Les écrous 103 sont montés de manière flottante dans des cages 107 ménagés dans des blocs 109 rapportés sur les cadres latéraux 87. Quand la vis 101 est entrainée en rotation dans un premier sens, les écrous 103 tendent à s'écarter transversalement l'un de l'autre. Les cadres latéraux 87 sont ainsi entrainés vers leurs positions basculées. Ce mouvement s'accompagne d'un déplacement de la vis 101, dans un plan vertical, vers le bas à l'intérieur du trou oblong 105. Au contraire, quand la vis 101 est entrainée en rotation en sens inverse, les écrous 103 tendent à se rapprocher l'un de l'autre, ce qui entraine les cadres latéraux vers leurs positions d'utilisation.

Comme visible notamment sur la figure 5, l'outil de brossage comporte deux mécanismes de verrouillage 91, disposés à ses deux extrémités longitudinales.

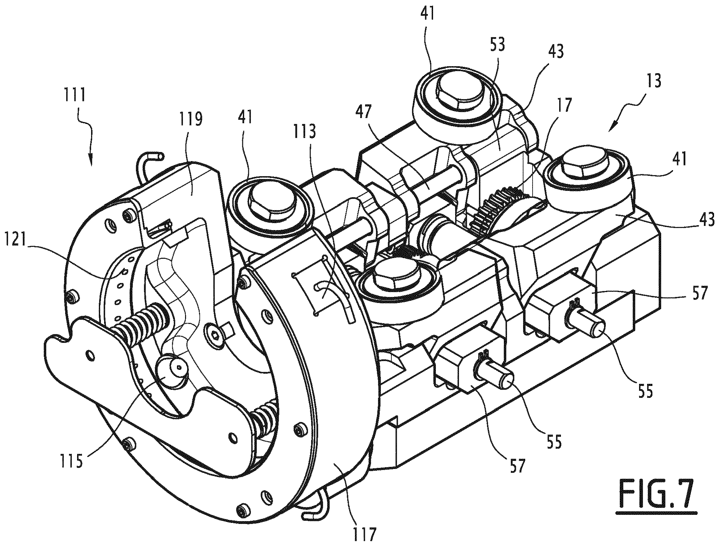

Un outil d'inspection et de marquage 111 est illustré sur la figure 7.

Cet outil comporte au moins une caméra 113, agencée pour inspecter la surface externe 2 du tube 1. De préférence, il comporte en outre un dispositif 115 de marquage de la surface externe.

Plus précisément, l'outil 111 comporte une structure de support 117 ayant la forme générale d'un anneau interrompu. L'anneau s'étend environ sur 300°. Il comporte une interruption 119, permettant d'engager l'outil 111 autour du tube, de manière à ce que le tube soit calé sensiblement dans l'axe de l'anneau. L'outil 111 comporte typiquement plusieurs caméras 113, agencé circonférentiellement autour de la structure 117, de manière à permettre l'observation de la surface externe 2 sur toute la périphérie du tube. Dans l'exemple représenté, l'outil 111 comporte quatre caméras 113, disposé à 90° les unes des autres.

De préférence, l'outil 111 comporte des moyens d'éclairage 121, par exemple un ruban portant une pluralité de diodes, monté sur une face radialement interne de la structure de support 117. Les diodes sont réparties circonférentiellement autour de la structure 117, de manière à pouvoir éclairer le tube sur toute sa circonférence.

Le dispositif de marquage 115 est monté sur la structure de support 117, typiquement sur la face radialement interne de la structure 117. Il est prévu pour marquer d'un point de couleur la surface externe du tube, quand un contrôle vidéo via les caméras a permis de mettre en évidence une zone nécessitant une intervention. Le dispositif 115 est du type réalisant un marquage par projection d'un dépôt de peinture, ou du type réalisant le marquage par contact d'un embout de feutre, ou encore de tout autre type.

Un tel marquage permet aux opérateurs d'identifier facilement et rapidement les zones à traiter.

En variante, l'outil d'inspection 111 comporte une couronne fixe liée au porteur, et une couronne mobile portant les caméras. La couronne mobile est déplaçable circonférentiellement autour du tube par rapport à la couronne fixe, afin d'améliorer si besoin l'interprétation visuelle de la surface du tube.

Selon une autre variante non représentée, l'outil d'inspection comporte deux mâchoires portant chacune des galets, liées à la structure de support par des articulations respectives. Chaque mâchoire est mobile par rapport à la structure 117 entre une position écartée du tube et une position rapprochée dans laquelle les galets sont au contact du tube. Dans la position rapprochée, les galets assurent le guidage et l'équilibrage de l'outil d'inspection 111 sur le tube pendant son déplacement le long du tube.

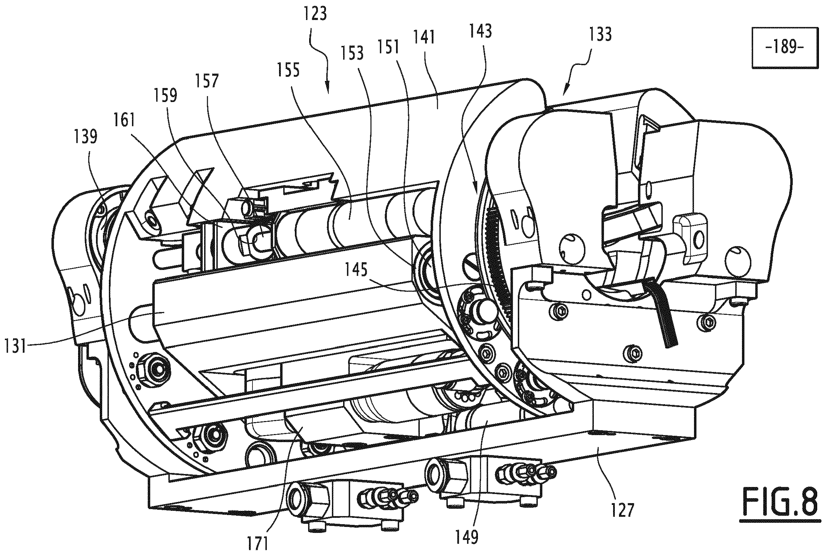

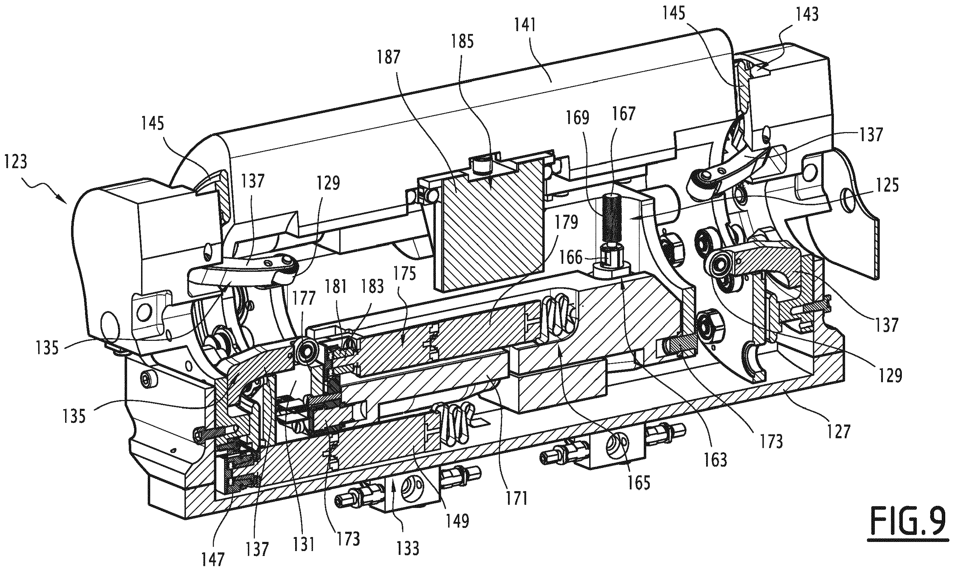

L'ensemble de l'invention comporte encore un outil d'usinage 123 représenté sur les figures 8 et 9.

L'outil 123 comporte au moins un dispositif d'usinage 125, susceptible d'usiner la surface externe 2 du tube 1, et comporte de préférence deux dispositifs d'usinage 125 diamétralement opposés l'un à l'autre par rapport au tube 1.

Plus précisément, l'outil d'usinage 123 comporte :
- un cadre 127 ;
- une pluralité de galets de guidage 129 liés au cadre 127, agencés pour coopérer avec le tube 1 de telle sorte que l'outil d'usinage 123 soit supporté par le tube et soit susceptible de se déplacer le long du tube ;
- un chariot 131 portant le ou les dispositifs d'usinage 125 ;
- une liaison 133 du chariot 131 au cadre 127, agencée pour que le chariot soit mobile par rapport au cadre 127 en translation longitudinalement le long du tube et en rotation circonférentiellement autour du tube.

Comme visible sur la figure 9, l'outil d'usinage 123 comporte deux ensembles de galets 129, permettant le supportage de l'outil 123 sur le tube, aux deux extrémités longitudinales opposées de l'outil. Chaque ensemble de galets comporte plusieurs galets 129, répartis circonférentiellement autour du tube.

Dans l'exemple représenté, l'outil d'usinage 123 comporte deux ensembles de trois galets 129.

L'outil d'usinage comporte encore, pour chaque galet, une liaison 135 du galet 129 au cadre 127, au moins certaines des liaisons 135 étant susceptibles de déplacer les galets entre des positions respectives écartées du tube et des positions respectives en contact avec la surface externe du tube.

Comme visible sur la figure 9, chaque liaison 135 comporte un bras 137 sur lequel le galet 129 est monté.

Dans certaines liaisons 135, le bras 137 est rigidement fixé au cadre 127.

Dans d'autres liaisons 135, le bras 137 est monté pivotant sur le cadre 127. Dans ce cas, la liaison 135 comporte un vérin double effets, permettant de déplacer le bras 137 et le galet 129 en rotation autour de l'axe du pivot. L'un des vérins 139 est visible sur la figure 8.

Dans l'exemple représenté sur la figure 9, les galets 129 situés en partie inférieure de l'outil d'usinage sont fixes. Les deux galets 129 situés, à chaque extrémité longitudinale de l'outil, en partie supérieure, sont mobiles.

Dans les positions écartées des galets, il est possible de disposer l'outil d'usinage autour du tube.

Une fois l'outil autour du tube, le cadre fixe 127 et les galets fixes 129 sont situés sous le tube, les galets mobiles 129 étant situés au-dessus du tube.

La liaison 133 du chariot au cadre comporte un cadre intermédiaire 141, et une liaison 143 du cadre intermédiaire 141 au cadre fixe 127, agencée de telle sorte que le cadre 141 est mobile circonférentiellement autour du tube par rapport au cadre fixe 127.

La liaison 143 comporte deux crémaillères 145 rigidement fixées aux deux extrémités longitudinales opposées du cadre intermédiaire, et deux roues dentées 147 coopérant chacune avec une crémaillère. Les roues dentées 147 sont rigidement fixées aux arbres de sortie des moteurs 149, les moteurs 149 étant rigidement fixés au cadre fixe.

Par ailleurs, la liaison 133 du chariot au cadre comporte encore un axe fixe longitudinal 151 rigidement fixé au cadre intermédiaire 141 (voir figure 8). Le chariot 131 est monté coulissant le long de l'axe 151 par l'intermédiaire de douilles à billes 153.

Par ailleurs, la liaison 133 comporte un moteur 155 rigidement fixé au chariot 131, entrainant en rotation une vis sans fin longitudinale 157. La vis 157 est engagée dans des orifices filetés 159, ménagé dans des plaques 161 rigidement fixées au cadre intermédiaire 141 (figure 8). Ainsi, quand le moteur 155 entraine la vis 157 en rotation en sens horaire, le chariot 131 se déplace longitudinalement dans un premier sens sous l'effet de la coopération entre la vis 157 et les orifices filetés 159. Quand le moteur 155 entraine en rotation la vis en sens inverse, le chariot se déplace longitudinalement dans l'autre sens.

Dans l'exemple représenté, l'outil d'usinage 123 comporte deux dispositifs d'usinage 125, agencés pour pourvoir usiner des zones respectives diamétralement opposées de la surface externe du tube.

En variante, l'outil d'usinage ne comporte qu'un seul dispositif d'usinage, déplaçable circonférentiellement autour du tube de manière à pourvoir usiner toute la périphérie du tube.

Selon encore une autre variante, l'outil d'usinage comporte plus de deux dispositifs d'usinage par exemple trois dispositifs d'usinage ou plus.

Chaque dispositif d'usinage 125 comprend un organe d'usinage 163 et une liaison 165 de l'organe d'usinage 163 au chariot 131 susceptible de faire basculer l'organe d'usinage 163 par rapport au chariot 131 dans un plan perpendiculaire au tube, de manière à mettre en contact l'organe d'usinage 163 avec la surface externe 2 du tube.

Dans l'exemple représenté, les deux organes d'usinage 163 sont liés au chariot 131 par la même liaison 165. La liaison 165 est commune aux deux dispositifs d'usinage 125. En variante, les organes d'usinage 163 sont liés au chariot 131 par des liaisons 165 différentes.

Dans l'exemple représenté, chaque organe d'usinage 163 est une meuleuse. Il comporte un bloc moteur 166 ayant un arbre de sortie rotatif 167, et une tête d'usinage, ici une fraise 169, fixée à l'arbre de sortie 167. L'arbre de sortie 167 est perpendiculaire à l'axe du tube, et débat dans un plan perpendiculaire à l'axe du tube. En variante, l'organe d'usinage n'est pas une meuleuse mais un disque abrasif ou tout autre type d'organe d'usinage adapté pour l'enlèvement de la matière à la surface externe du tube.

La liaison 165 de l'organe d'usinage du chariot comporte une pièce de support 171 à laquelle le bloc moteur 166 est rigidement fixé, un pivot 173 liant le support 171 au chariot 131 et une motorisation 175 entrainant le support 171 en rotation autour du pivot 173 par rapport au chariot 131. Le pivot 173 est d'axe longitudinal. Plus précisément, comme le montre la figure 9, le support 171 est lié par ses deux extrémités longitudinales opposées au chariot 131 par deux pivots 173. Les pivots 173 sont alignés.

La motorisation 175 comporte un pignon fixe 177 rigidement fixé au chariot 131, un moteur 179 rigidement fixé au support 171 et une roue dentée 181 rigidement fixée à l'arbre de sortie 183 du moteur 179, et engrenant le pignon fixe 177.

Quand le moteur 179 est activé de manière à entrainer la roue dentée 181 en rotation dans un premier sens, le support 171 est entrainé à son tour en rotation autour des pivots 173. Ceci provoque le basculement de l'organe d'usinage 163 vers le tube, jusqu'à ce que la tête d'usinage 169 soit en contact avec la surface externe du tube. Quand le moteur est commandé de manière à entrainer l'arbre de sortie et la roue dentée en sens inverse, l'organe d'usinage est ramené vers sa position initiale, et la tête d'usinage n'est plus en contact avec la surface externe du tube.

En variante, le mouvement de plongée de la fraise est obtenu non pas par pivotement mais par translation latérale de la liaison 165 via des guidages à billes.

L'outil d'usinage 123 comporte de préférence encore au moins une pince 185 susceptible de verrouiller de manière réversible l'outil d'usinage en position sur le tube. La pince est visible notamment sur la figure 9.

Typiquement, l'outil d'usinage comporte une pince unique. En variante, l'outil d'usinage comporte deux pinces ou plus de deux pinces.

La ou chaque pince 185 comporte typiquement deux mors 187 disposés de part et d'autre du tube, et des actionneurs non représentés, prévus pour déplacer de manière réversible les deux mors 187 l'un vers l'autre.

Comme visible sur la figure 9, chaque mors 187 est une plaque ayant une surface d'appui prévue pour venir porter contre le tube. La surface d'appui est sensiblement parallèle à la direction longitudinale. Les deux mors 187 sont diamétralement opposés l'un à l'autre par rapport au tube. Les actionneurs sont typiquement des vérins double effet, prévus pour pousser chaque mors 187 contre le tube, suivant une direction sensiblement perpendiculaire à l'axe du tube.

La pince 185 est liée au cadre intermédiaire 141.

En variante, la pince 185 est liée au chariot 131 ou au cadre 127.

Les mouvements de tous les éléments de l'outil d'usinage sont pilotés à distance via un calculateur 189. Les positions et les mouvements des différents éléments de l'outil d'usinage sont détectés et enregistrés par des codeurs, qui transmettent les informations au calculateur 189. Ceci est vrai pour le déplacement en rotation du cadre intermédiaire 141 par rapport au cadre fixe 127, le déplacement longitudinal du chariot 131 par rapport au cadre intermédiaire, et le déplacement en rotation des organes d'usinage 163 par rapport au chariot.

La profondeur d'affouillement, c'est-à-dire la profondeur d'usinage, est maitrisée en détectant de manière précise l'instant auquel l'organe d'usinage 163 entre en contact avec la surface externe 2 du tube. Pour ce faire, l'outil d'usinage est équipé par exemple d'un organe de détection des vibrations engendrées par la tête d'usinage au contact du tube, ou par un organe de détection d'une variation d'intensité du moteur 179 qui déplace l'organe d'usinage par rapport au tube, soit encore d'un moyen de mesure vidéo de l'empreinte réalisée par l'organe d'usinage dans le tube.

De préférence, l'outil d'usinage est équipé d'une caméra dont l'axe optique est sensiblement parallèle à l'axe de l'organe d'usinage, ce qui permet, si nécessaire, de positionner avec précision la tête d'usinage sur la zone à usiner, et de visualiser en temps réel le travail effectué sur le tube.

L'outil d'usinage 123 est adapté pour recevoir des palpeurs de mesure au contact ou à distance en lieu et place des organes d'usinage 163, pour pouvoir mesurer une profilométrie ou des états de surface des formes usinées.

Les caméras et les différents moyens de mesure et de détection communiquent avec le calculateur 189.

De même, tous les moteurs et tous les actionneurs du porteur et des outils sont commandés à distance dans le calculateur 189. Tous les codeurs et tous les détecteurs embarqués à bord du porteur et des différents outils communiquent les informations ou les mesures effectuées au calculateur 189.

L'ensemble d'intervention est ainsi conçu de façon à permettre la restauration de la surface externe des tubes, de manière robotisée. Les interventions humaines sont extrêmement réduites, et sont en pratique limitées à la mise en place du porteur et des outils sur le tube, et à la connexion de chacun des outils utilisés au porteur.

Un tel ensemble permet donc de réduire de manière considérable les doses reçues par les opérateurs quand l'intervention doit avoir lieu dans un environnement où les débits de doses sont très élevés.

Le procédé d'intervention sur la surface externe d'un tube à l'aide de l'ensemble décrit ci-dessus va maintenant être détaillé.

Le procédé comprend au moins les étapes suivantes :
- mise en place sur le tube 1 du porteur 13 et d'un outil 81, 111, 123 lié au porteur 13;
- déplacement du porteur 13 et de l'outil 81, 111, 123 le long du tube 1 ;
- réalisation d'au moins une opération d'inspection ou de maintenance sur la surface externe 2 du tube 1 avec l'outil 81, 111, 123.

Typiquement, le procédé comprend plusieurs opérations d'inspection et/ou de maintenance sur la surface externe du tube, mettant en œuvre plusieurs outils.

Toutefois, l'intervention peut être limitée à une seule opération : simple brossage des surfaces, ou simple examen visuel à l'aide de l'outil d'inspection, ou encore simple usinage d'une zone de la surface externe dont la position est déjà connue.

Ainsi, typiquement, le procédé comprend une ou plusieurs des étapes suivantes :
- brossage de la surface externe 2 du tube 1 à l'aide d'un outil de brossage 81 lié au porteur 13;
- inspection de la surface externe 2 du tube 1 à l'aide d'un outil d'inspection 111 lié au porteur 13;
- marquage de la surface externe 2 du tube 1 à l'aide d'un outil d'inspection 111 lié au porteur 13;
- usinage de la surface externe 2 du tube 1à l'aide d'un outil d'usinage 123 lié au porteur 13.

L'étape de mise en place du porteur 13 sur le tube 1 est effectuée de la manière suivante.

Initialement, les mâchoires 43 sont dans leurs positions ouvertes. Un opérateur s'approche du tube avec le porteur 13 et engage le tube entre les mâchoires 43. Le fond 25 est orienté vers le bas et des galets 41 sont orientés vers le haut. Les organes de roulement 17 sont situés immédiatement sous le tube. Puis, l'opérateur fait tourner les vis 55 dans un sens choisi pour éloigner les blocs 57 les uns des autres. Ceci a pour effet de déplacer les mâchoires 43 vers leurs positions fermées, jusqu'à ce que le tube soit pincé entre les organes de roulement 17 et les galets 41. L'opérateur ajuste la force avec laquelle les organes de roulement et les galets pincent le tube, jusqu'à une valeur prédéterminée. En variante, le serrage/desserrage des mâchoires 43 est piloté à distance, des moteurs ou des vérins remplaçant les vis 55.

Selon une autre variante, la mise en place du porteur et/ou des outils sur les tubes est effectuée de façon automatique avec un bras prenant le porteur et/ou les outils dans un magasin et les mettant en position sur les tubes. Dans ce cas les serrages / desserrage sont pilotés à distance par le biais de vérins ou de moteurs externes.

Typiquement, la première étape est de réaliser le brossage de la surface externe du tube à l'aide de l'outil de brossage 81 décrit plus haut en référence aux figures 5 et 6.

L'opérateur met donc d'abord en place l'outil de brossage 81 autour du tube 1. Généralement, il est déjà lié au porteur 13, avant sa mise en place.

Initialement, les cadres latéraux 87 sont en positions basculées. L'opérateur introduit le tube 1 entre les deux cadres latéraux 87, le cadre central 85 étant placé sous le tube 1. Puis, l'opérateur entraine la vis 91 en rotation, dans un sens adapté pour ramener les cadres latéraux 87 dans leurs positions d'utilisation. Les bords internes 97 des brosses viennent alors s'adapter au contact de la surface externe du tube.

L'opérateur évacue ensuite la zone d'intervention.

En variante, la fermeture des cadres latéraux 87 en position d'utilisation sur le tube est effectuée de manière automatique, pilotée à distance. Les vis 91 dans ce cas sont remplacées par des vérins ou des moteurs. Ce pilotage à distance permet également d'ouvrir les cadres latéraux 87 lorsque l'opérateur intervient pour retirer l'outil en fin de brossage.

Le porteur et l'outil sont généralement mis en place à une première extrémité du tube.

Puis, un opérateur placé à distance du tube 1, dans une zone sans risque, commande à distance le déplacement du porteur 13 et de l'outil de brossage 81 le long du tube 1, via le calculateur 189.

Pour ce faire, il active le moteur 33. Celui-ci entraine en rotation les organes de roulement 17. Le porteur et l'outil de brossage se déplacent ainsi sur toute la longueur du tube, jusqu'à une extrémité du tube opposée à la première extrémité.

L'arrivée de l'outil de brossage à la seconde extrémité du tube est détectée par exemple par un détecteur de fin de course monté sur l'outil de brossage ou par un détecteur de fin de course monté sur le porteur ou encore par une caméra montée sur le porteur ou sur l'outil de brossage.

L'opérateur commande ensuite le déplacement du porteur 13 et de l'outil de brossage 81 en sens inverse selon le long du tube 1, de manière à ramener ceux-ci jusqu'à la première extrémité du tube. Un opérateur intervient alors ensuite pour séparer l'outil de brossage 81 du porteur 13, et mettre en place l'outil d'inspection 111 sur le tube.

En variante, l'ensemble constitué du porteur 13 et de l'outil de brossage 81 est déposé du tube et remplacé par un autre ensemble, comportant un autre porteur et l'outil d'inspection 111.

Pour ce faire, il engage le tube 1 dans l'encoche 119, de manière à placer la structure en anneau 117 autour du tube. Il connecte l'outil d'inspection 111 au porteur 13.

Il évacue ensuite la zone d'intervention.

De nouveau, un opérateur commande à distance le déplacement du porteur 13 et de l'outil d'inspection 111 le long du tube, via le calculateur 189.

Pendant le déplacement, le bandeau lumineux 121 illumine la surface externe du tube, et les caméras 113 enregistrent des images de la surface externe, sur toute la périphérie du tube. Les caméras 113 transmettent les images enregistrées au calculateur 189.

Les images transmises sont analysées en temps réel par un opérateur, ou au contraire sont enregistrées et analysées en décalé.

Les codeurs embarqués à bord du porteur 13 permettent d'associer chaque image à une position longitudinale le long du tube.

Quand une zone endommagée est identifiée sur les images transmises par les caméras, un marquage peut être apposé sur la surface externe 2 du tube 1, par le dispositif de marquage 115. Ce marquage est commandé à distance, via le calculateur 189. Le marquage est effectué immédiatement si les images sont analysées au fur et à mesure de leur transmission, ou au contraire le marquage peut être apposé plus tard, en ramenant le porteur 13 jusqu'à la zone défectueuse repérée.

Par exemple, les images peuvent enregistrées pendant le trajet aller de l'outil d'inspection 111, depuis la première extrémité du tube jusqu'à la deuxième extrémité, et les repères visuels peuvent être apposés lors du trajet retour.

L'arrivée du porteur et de l'outil d'inspection à la seconde extrémité du tube est détectée par exemple par un détecteur de fin de course monté sur l'outil d'inspection, ou par un détecteur de fin de course monté sur le porteur, ou par une caméra montée sur l'outil ou le porteur.

Une fois le porteur 13 et l'outil d'inspection 111 revenus à la première extrémité du tube, un opérateur vient démonter l'outil d'inspection 111. Il met en place ensuite l'outil d'usinage 123 autour du tube, et le raccorde au porteur 13.

En variante, on dépose du tube l'ensemble constitué par le porteur et l'outil d'inspection 111, et on le remplace par un ensemble constitué par encore un autre porteur et l'outil d'usinage 123.

Pour ce faire, les galets 139 de l'outil d'usinage sont initialement dans leurs positions respectives écartées du tube. L'opérateur met en place l'outil d'usinage 123 de telle sorte que le cadre 127 soit placé sous le tube. Il engage le tube entre les galets 129, puis commande le déplacement des galets 129 jusqu'à leurs positions au contact du tube.

Initialement, la pince 185 est ouverte, et le ou les organes d'usinage 125 ne sont pas en contact avec la surface externe 2 du tube 1.

L'opérateur évacue ensuite la zone d'intervention. Un opérateur commande ensuite à distance le déplacement du porteur 13 et de l'outil d'usinage 123 le long du tube 1 jusqu'à ce que l'outil d'usinage soit en place au niveau d'une des zones à usiner de la surface externe 2 du tube 1.

Les codeurs équipant le porteur permettent de mettre en place l'organe d'usinage 123 avec précision au niveau des zones préalablement repérées avec l'outil d'inspection 111.

Puis, la position de chaque dispositif d'usinage 125 est ajustée finement par rapport à la zone à usiner, en utilisant la liaison du chariot 131 au cadre 127. Le moteur 149 est utilisé pour déplacer le cadre intermédiaire 141 par rapport au cadre fixe 127. Le moteur 155 est utilisé pour déplacer le chariot 131 par rapport au cadre intermédiaire 141.

Cette mise en place fine est effectuée par l'opérateur via le calculateur 189, notamment avec l'aide des caméras embarquées sur l'outil d'usinage.

L'outil d'usinage 123 est ensuite verrouillé en position sur le tube 1, par le biais de la pince 185. Les vérins sont actionnés de manière à serrer les mors 187 contre le tube 1, de part et d'autre du tube.

Le ou les dispositifs d'usinage 125 sont ensuite activés, et l'opérateur commande via le calculateur 189 le déplacement de chaque organe d'usinage 163 par rapport au chariot 131 jusqu'à ce que la ou chaque tête d'usinage 169 soit en contact avec la zone à usiner de la surface externe du tube. La mise en contact de la tête d'usinage 169 avec la surface externe du tube est détectée, soit par la caméra embarquée soit par les détecteurs prévus à cet effet, comme décrit plus haut.

L'opérateur commande la poursuite du déplacement de la ou les têtes d'usinage 169 jusqu'à ce que la profondeur d'usinage requise soit atteinte.

Si nécessaire, le chariot 131 est déplacé longitudinalement pendant que la tête d'usinage 169 est en action, ce qui permet par exemple de réaliser des formes rayonnées par interpolation des deux axes de travail (axe de déplacement longitudinal le long du tube, axe de plongée de la tête perpendiculaire à l'axe du tube).

Une fois la profondeur requise atteinte, l'opérateur commande via le calculateur 189 d'écarter la ou les têtes d'usinage du tube. Il déplace ensuite si nécessaire longitudinalement le chariot 131, pour placer la ou chaque tête d'usinage dans une position adéquate pour usiner une autre partie de la même zone si nécessaire. Il peut aussi desserrer la pince 185 et déplacer circonférentiellement le cadre intermédiaire 141 et le chariot 131 autour du tube, à l'aide du moteur 149.

Après avoir serré une nouvelle fois la pince, il actionne le moteur 179 de façon à remettre la ou chaque tête d'usinage au contact de la zone à usiner.

Une fois la première zone entièrement usinée, l'opérateur déplace le porteur et l'outil d'usinage jusqu'à une autre zone à usiner, et ainsi de suite.

## Revendications

1. Ensemble prévu pour réaliser des interventions sur une surface externe (2) d'un tube (1) d'un réacteur nucléaire, l'ensemble comprenant :
- un porteur (13) mobile le long du tube (1) ;
- au moins un outil d'inspection ou de maintenance (81, 111, 123), lié au porteur (13) ;
le porteur (13) comprenant :
- au moins un organe de roulement (17), placé en contact avec la surface externe (2) du tube (1) ;
- un actionneur (33), agencé pour entraîner l'organe de roulement (17) en rotation par rapport au tube (1), de manière à propulser le porteur (13) le long du tube (1) par coopération entre l'organe de roulement (17) et la surface externe (2) du tube (1) ;
- un dispositif (21) de liaison du porteur (13) au tube (1), agencé pour que le tube (1) reprenne au moins 50% du poids du porteur (13) et de l'outil (81, 111, 123) ;
**caractérisé en ce que** l'un des outils est un outil d'usinage (123) comportant au moins un dispositif d'usinage (125) susceptible d'usiner la surface externe (2) du tube (1) et d'affouiller des zones endommagées de la surface externe (2) du tube (1), de préférence deux dispositifs d'usinage (125) diamétralement opposés par rapport au tube (1), et **en ce que** l'outil d'usinage (123) comporte :
- un cadre (127) ;
- une pluralité de galets de guidage (129) liés au cadre (127), agencés pour coopérer avec le tube (1) de telle sorte que l'outil d'usinage (123) soit supporté par le tube (1) et soit susceptible de se déplacer le long du tube (1) ;
- un chariot (131) portant le ou chaque dispositif d'usinage (125) ;
- une liaison (133) du chariot (131) au cadre (127), agencée pour que le chariot (131) soit mobile par rapport au cadre (127) en translation le long du tube (1) et en rotation autour du tube (1).

2. Ensemble selon la revendication 1, **caractérisé en ce que** le porteur (13) comprend un châssis (15) auquel est lié le ou chaque organe de roulement (17), le dispositif (21) de liaison du porteur (13) au tube (1) comprenant au moins un galet (41) lié au châssis (15), disposé de manière à pincer le tube (1) entre le ou chaque galet (41) et le ou chaque organe de roulement (17) avec une force prédéterminée.

3. Ensemble selon la revendication 2, **caractérisé en ce que** le ou chaque organe de roulement (17) a un revêtement antidérapant, ledit revêtement antidérapant, ladite force prédéterminée et un couple moteur maximal susceptible d'être transmis par l'actionneur au ou à chaque organe de roulement (17) étant choisis pour que le porteur (13) et l'outil (81, 111, 123) puissent être maintenus immobiles autour d'un tronçon (7) de tube (1) d'orientation verticale.

4. Ensemble selon l'une quelconque des revendications 2 à 3, **caractérisé en ce que** le dispositif (21) de liaison du porteur (13) au tube (1) comporte au moins une mâchoire (43) portant au moins le ou un des galets (41), et une liaison (45) de la mâchoire (43) au châssis (15) agencée pour que la mâchoire (43) soit mobile entre une position ouverte dans laquelle le porteur (13) est susceptible d'être séparé du tube (1), et une position fermée dans laquelle le tube (1) est pincé entre le ou chaque galet (41) et le ou chaque organe de roulement (17).

5. Ensemble selon l'une quelconque des revendications précédentes, **caractérisé en ce que** le porteur (13) comprend un codeur (65) adapté pour déterminer une position courante du porteur (13) le long du tube (1).

6. Ensemble selon l'une quelconque des revendications précédentes, **caractérisé en ce que** l'ensemble comprend une liaison (67) adaptée pour lier le porteur (13) au ou à chaque outil (81, 111, 123), ladite liaison conférant au moins un degré de liberté au ou à chaque outil (81, 111, 123) par rapport au porteur (13).

7. Ensemble selon l'une quelconque des revendications précédentes, **caractérisé en ce que** l'un des outils est un outil de brossage (81) comportant au moins une brosse (83) agencée pour brosser la surface externe (2) du tube (1).

8. Ensemble selon la revendication 7, **caractérisé en ce que** l'outil de brossage (81) comporte plusieurs brosses (83) ayant des formes de demi-anneau, diamétralement opposées les unes aux autres par rapport au tube (1).

9. Ensemble selon l'une quelconque des revendications précédentes, **caractérisé en ce que** l'un des outils est un outil d'inspection (111) comportant au moins une caméra (113), agencée pour inspecter la surface externe (2) du tube (1).

10. Ensemble selon la revendication 9, **caractérisé en ce que** l'outil d'inspection (111) comporte un dispositif (115) de marquage de la surface externe (2).

11. Ensemble selon l'une quelconque des revendications précédentes, **caractérisé en ce que** l'outil d'usinage (123) comporte des liaisons (135) des galets (129) au cadre (127), au moins certaines liaisons (135) étant susceptibles de déplacer les galets (129) entre des positions respectives écartées du tube (1), et des positions respectives en contact avec la surface externe (2) du tube (1).

12. Ensemble selon l'une quelconque des revendications précédentes, **caractérisé en ce que** le ou chaque dispositif d'usinage (125) comporte un organe d'usinage (163) et une liaison (165) du dispositif d'usinage (125) au chariot (131) susceptible de faire basculer l'organe d'usinage (163) par rapport au chariot (131) dans un plan perpendiculaire au tube (1) de manière mettre en contact l'organe d'usinage (163) avec la surface externe (2) du tube (1).

13. Ensemble selon l'une quelconque des revendications précédentes, **caractérisé en ce que** l'outil d'usinage (123) comporte au moins une pince (185) susceptible de verrouiller de manière réversible l'outil d'usinage (123) en position sur le tube (1).

14. Procédé d'intervention sur une surface externe d'un tube à l'aide d'un ensemble selon l'une quelconque des revendications précédentes, le procédé comprenant au moins les étapes suivantes :
- mise en place sur le tube (1) du porteur (13) et de l'outil (81, 111, 123) lié au porteur (13) ;
- déplacement du porteur (13) et de l'outil (81, 111, 123) le long du tube (1) ;
- réalisation d'au moins une opération d'inspection ou de maintenance sur la surface externe (2) du tube (1) avec l'outil (81, 111, 123), ladite opération étant un usinage de la surface externe (2) du tube (1) à l'aide d'un outil d'usinage (123) lié au porteur (13), par affouillement d'une zone endommagée de la surface externe (2) du tube (1).

15. Procédé selon la revendication 14, **caractérisé en ce que** le procédé comprend une ou plusieurs des étapes suivantes :
- brossage de la surface externe (2) du tube (1) à l'aide d'un outil de brossage (81) lié au porteur (13) ;
- inspection de la surface externe (2) du tube (1) à l'aide d'un outil d'inspection (111) lié au porteur (13) ;
- marquage de la surface externe (2) du tube (1) à l'aide d'un outil d'inspection (111) lié au porteur (13).

## Patentansprüche

1. Einrichtung, die vorgesehen ist zum Durchführen von Eingriffen auf eine äußere Fläche (2) eines Rohrs (1) eines Kernreaktors, wobei die Einrichtung aufweist:
- einen Träger (13), der entlang des Rohrs (1) bewegbar ist,
- wenigstens ein Inspektions- oder Wartungswerkzeug (81, 111, 123), das mit dem Träger (13) verbunden ist,
wobei der Träger (13) aufweist:
- wenigstens ein Rollenorgan (17), das in Kontakt mit der äußeren Fläche (2) des Rohrs (1) platziert ist,
- eine Antriebsvorrichtung (33), die eingerichtet ist zum drehenden Antreiben des Rollenorgans (17) bezüglich des Rohrs (1), um den Träger (13) entlang dem Rohr (1) zu bewegen durch Kooperation zwischen dem Rollenorgan (17) und der äußeren Fläche (2) des Rohrs (1),
- eine Vorrichtung (21) zur Verbindung des Trägers (13) mit dem Rohr (1), die eingerichtet ist, damit das Rohr (1) wenigstens 50% des Gewichts des Trägers (13) und des Werkzeugs (81, 111, 123) aufnimmt,
**dadurch gekennzeichnet, dass** eines der Werkzeuge ein Spanwerkzeug (123) ist, welches aufweist wenigstens eine Spanvorrichtung (125), die imstande ist, die äußere Fläche (2) des Rohrs (1) spanend zu bearbeiten und beschädigte Bereiche der äußeren Fläche (2) des Rohrs (1) auszuräumen, bevorzugt zwei Spanvorrichtungen (125), die bezüglich des Rohrs (1) diametral entgegengesetzt angeordnet sind, und dass das Spanwerkzeug (123) aufweist:
- einen Rahmen (127),
- eine Mehrzahl von Führungsrollen (129), die mit dem Rahmen (127) verbunden sind und eingerichtet sind zum Kooperieren mit dem Rohr (1) derart, dass das Spanwerkzeug (123) von dem Rohr (1) gestützt ist und imstande ist, sich entlang dem Rohr (1) zu verlagern,
- einen Schlitten (131), der das oder jedes Spanwerkzeug (125) trägt,
- eine Verbindung (133) des Schlittens (131) mit dem Rahmen (127), die eingerichtet ist, damit der Schlitten (131) bezüglich des Rahmens (127) entlang dem Rohr (1) translations- und um das Rohr (1) drehbewegbar ist.

2. Einrichtung gemäß Anspruch 1, **dadurch gekennzeichnet, dass** der Träger (13) aufweist ein Gehäuse (15), mit welchem das oder jedes Rollenorgan (17) verbunden ist, wobei die Vorrichtung (21) zur Verbindung des Trägers (13) mit dem Rohr (1) aufweist wenigstens eine Rolle (41), die mit dem Gehäuse (15) verbunden ist und angeordnet ist, um das Rohr (1) zwischen der oder jeder Rolle (41) und dem Rollenorgan (17) mit einer vorbestimmten Kraft einzuklemmen.

3. Einrichtung gemäß Anspruch 2, **dadurch gekennzeichnet, dass** das oder jedes Rollenorgan (17) eine Antirutsch-Beschichtung hat, wobei die Antirutsch-Beschichtung, die vorbestimmte Kraft und ein maximales Antriebsdrehmoment, das von der Antriebsvorrichtung auf das oder auf jedes Rollenorgan (17) übertragbar ist, ausgewählt sind, damit der Träger (13) und das Werkzeug (81, 111, 123) um einen Abschnitt (7) des Rohrs (1) von vertikaler Orientierung immobil gehalten werden können.

4. Einrichtung gemäß irgendeinem der Ansprüche 2 bis 3, **dadurch gekennzeichnet, dass** die Vorrichtung (21) zur Verbindung des Trägers (13) mit dem Rohr (1) aufweist wenigstens eine Backe (43), die wenigstens die oder eine der Rollen (41) trägt, und eine Verbindung (45) der Backe (43) mit dem Gehäuse (15), die eingerichtet ist, damit die Backe (43) zwischen einer Offen-Position, in welcher der Träger (13) imstande ist, von dem Rohr (1) separiert zu werden, und einer Geschlossen-Position, in welcher das Rohr (1) zwischen die oder jede Rolle (41) und das oder jedes Rollenorgan (17) geklemmt ist, bewegbar ist.

5. Einrichtung gemäß irgendeinem der vorhergehenden Ansprüche, **dadurch gekennzeichnet, dass** der Träger (13) einen Codierer (65) aufweist, der angepasst ist zum Ermitteln einer momentanen Position des Trägers (13) entlang dem Rohr (1).

6. Einrichtung gemäß irgendeinem der vorhergehenden Ansprüche, **dadurch gekennzeichnet, dass** die Einrichtung eine Verbindung (67) aufweist, die angepasst ist zum Verbinden des Trägers (13) mit dem oder jedem Werkzeug (81, 111, 123), wobei die Verbindung dem oder jedem Werkzeug (81, 111, 123) bezüglich des Trägers (13) wenigstens einen Freiheitsgrad verleiht.

7. Einrichtung gemäß irgendeinem der vorhergehenden Ansprüche **dadurch gekennzeichnet, dass** eines der Werkzeuge ein Bürstenwerkzeug (81) ist, das wenigstens eine Bürste (83) aufweist, die eingerichtet ist zum Bürsten der äußeren Fläche (2) des Rohrs (1).

8. Einrichtung gemäß Anspruch 7, **dadurch gekennzeichnet, dass** das Bürstenwerkzeug (81) aufweist mehrere Bürsten (83), die eine Halbring-Form haben und die bezüglich des Rohrs (1) einander diametral entgegengesetzt sind.

9. Einrichtung gemäß irgendeinem der vorhergehenden Ansprüche, **dadurch gekennzeichnet, dass** eines der Werkzeuge ein Inspektionswerkzeug (111) ist, das wenigstens eine Kamera (113) aufweist, die eingerichtet ist zum Inspizieren der äußeren Fläche (2) des Rohrs (1).

10. Einrichtung gemäß Anspruch 9, **dadurch gekennzeichnet, dass** das Inspektionswerkzeug (111) eine Vorrichtung (115) zur Markierung der äußeren Fläche (2) aufweist.

11. Einrichtung gemäß irgendeinem der vorhergehenden Ansprüche, **dadurch gekennzeichnet, dass** das Spanwerkzeug (123) aufweist Verbindungen (135) der Rollen (129) mit dem Rahmen (127), wobei wenigstens einige Verbindungen (135) imstande sind, die Rollen (129) zu verlagern zwischen jeweiligen Positionen im Abstand von dem Rohr (1) und jeweiligen Positionen im Kontakt mit der äußeren Fläche (2) des Rohrs (1) .

12. Einrichtung gemäß irgendeinem der vorhergehenden Ansprüche, **dadurch gekennzeichnet, dass** die oder jede Spanvorrichtung (125) aufweist ein Spanorgan (163) und eine Verbindung (165) der Spanvorrichtung (125) mit dem Schlitten (131), die imstande ist, das Spanorgan (163) bezüglich des Schlittens (131) in einer Ebene senkrecht zum Rohr (1) schwenken zu lassen, um das Spanorgan (163) in Kontakt mit der äußeren Fläche (2) des Rohrs (1) zu bringen.

13. Einrichtung gemäß irgendeinem der vorhergehenden Ansprüche, **dadurch gekennzeichnet, dass** das Spanwerkzeug (123) wenigstens eine Klemmeinrichtung (185) aufweist, die imstande ist, das Spanwerkzeug (123) in reversibler Weise in Position an dem Rohr (1) festzulegen.

14. Verfahren zum Eingreifen auf eine äußere Fläche eines Rohrs mittels einer Einrichtung gemäß irgendeinem der vorhergehenden Ansprüche, wobei das Verfahren die folgenden Schritte aufweist:
- Platzieren des Trägers (13) und des mit dem Träger (13) verbundenen Werkzeugs (81, 111, 123) auf dem Rohr (1),
- Verlagern des Träger (13) und des Werkzeugs (81, 111, 123) entlang dem Rohr (1),
- Durchführen wenigstens eines Inspektions- oder Wartungsvorgangs an der äußeren Fläche (2) des Rohrs (1) mit dem Werkzeug (81, 111, 123), wobei der Vorgang ein spanendes Bearbeiten der äußeren Fläche (2) des Rohrs (1) mittels eines mit dem Träger (13) verbundenen Spanwerkzeugs (123) ist, unter Ausräumen eines beschädigten Bereichs der äußeren Fläche (2) des Rohrs (1).

15. Verfahren gemäß Anspruch 14, **dadurch gekennzeichnet, dass** das Verfahren aufweist einen oder mehrere der folgenden Schritte:
- Bürsten der äußeren Fläche (2) des Rohrs (1) mittels eines Bürstenwerkzeugs (81), das mit dem Träger (13) verbunden ist,
- Inspizieren der äußeren Fläche (2) des Rohrs (1) mittels eine Inspektionswerkzeugs (111), das mit dem Träger (13) verbunden ist,
- Markieren der äußeren Fläche (2) des Rohrs (1) mittels eines Inspektionswerkzeugs (11), das mit dem Träger (13) verbunden ist.

## Claims

1. An assembly for acting on an outer surface (2) of a tube (1) of a nuclear reactor, the assembly comprising:
- a carrier (13) movable along the tube (1);
- at least one inspection or maintenance tool (81, 111, 123), connected to the carrier (13);
the carrier (13) comprising :
- at least one rolling body (17), placed in contact with the outer surface (2) of the tube (1);
- an actuator (33), arranged to rotate the rolling body (17) relative to the tube (1), so as to propel the carrier (13) along the tube (1) by cooperation between the rolling body (17) and the outer surface (2) of the tube (1);
- a device (21) for connecting the carrier (13) to the tube (1), arranged so that the tube (1) absorbs at least 50% of the weight of the carrier (13) and the tool (81, 111, 123);
**characterized in that** one of the tools is a machining tool (123) including at least one machining device (125) able to machine the outer surface (2) of the tube (1) and to gouge damaged areas of the outer surface (2) of the tube (1), preferably two machining devices (125) that are diametrically opposite relative to the tube (1), and **in that** the machining tool (123) includes:
- a frame (127);
- a plurality of guide rollers (129) connected to the frame (127), arranged to cooperate with the tube (1) such that the machining tool (123) is supported by the tube (1) and is able to move along the tube (1);
- a carriage (131) carrying the or each machining devices (125);
- a connection (133) of the carriage (131) to the frame (127), arranged so that the carriage (131) is translatable longitudinally relative to the frame (127) along the tube (1) and circumferentially rotatable around the tube (1).

2. The assembly according to claim 1, **characterized in that** the carrier (13) comprises a chassis (15) to which the or each rolling body (17) is connected, the device (21) for connecting the carrier (13) to the tube (1) comprising at least one roller (41) connected to the chassis (15), arranged so as to pinch the tube (1) between the or each roller (41) and the or each rolling body (17) with a predetermined force.

3. The assembly according to claim 2, **characterized in that** the or each rolling body (17) has a nonslip coating, said nonslip coating, said predetermined force and a maximum motor torque that may be transmitted by the actuator to the or each rolling body (17) being chosen so that the carrier (13) and the tool (81, 111, 123) can be kept immobile around a vertical tube (1) segment (7).

4. The assembly according to any one of claims 2 to 3, **characterized in that** the device (21) for connecting the carrier (13) to the tube (1) includes at least one gripper (43) bearing at least the or one of the rollers (41), and a connection (45) of the gripper (43) to the chassis (15) arranged so that the gripper (43) is movable between an open position in which the carrier (13) can be separated from the tube (1), and a closed position in which the tube (1) is pinched between the or each roller (41) and the or each rolling body (17).

5. The assembly according to any one of the preceding claims, **characterized in that** the carrier (13) comprises a coder (65) suitable for determining a current position of the carrier (13) along the tube (1).

6. The assembly according to any one of the preceding claims, **characterized in that** the assembly comprises a connection (67) suitable for connecting the carrier (13) to the or each tool (81, 111, 123), said connector imparting at least one degree of freedom to the or each tool (81, 111, 123) relative to the carrier (13).

7. The assembly according to any one of the preceding claims, **characterized in that** one of the tools is a brushing tool (81) including at least one brush (83) arranged to brush the outer surface (2) of the tube (1).

8. The assembly according to claim 7, **characterized in that** the brushing tool (81) includes several brushes (83) having half-ring shapes, diametrically opposite one another relative to the tube (1).

9. The assembly according to any one of the preceding claims, **characterized in that** one of the tools is an inspection tool (111) including at least one camera (113), arranged to inspect the outer surface (2) of the tube (1).

10. The assembly according to claim 9, **characterized in that** the inspection tool (111) includes a device (115) for marking the outer surface (2).

11. The assembly according to any one of the preceding claims, **characterized in that** the machining tool (123) includes connections (135) of the rollers (129) to the frame (127), at least some connections (135) being able to move the rollers (129) between respective positions separated from the tube (1), and respective positions in contact with the outer surface (2) of the tube (1).

12. The assembly according to any one of the preceding claims, **characterized in that** the or each machining device (125) includes a machining member (163) and a connection (165) of the machining device (125) to the carriage (131) able to tilt the machining member (163) relative to the carriage (131) in a plane perpendicular to the tube (1) so as to place the machining member (163) in contact with the outer surface (2) of the tube (1).

13. The assembly according to any one of the preceding claims, **characterized in that** the machining tool (123) includes at least one clamp (185) able to reversibly lock the machining tool (123) in position on the tube (1).

14. A method for acting on an outer surface of a tube using an assembly according to any one of the preceding claims, the method comprising at least the following steps:
- placing the carrier (13) and the tool (81, 111, 123) connected to the carrier (13) on the tube (1);
- moving the carrier (13) and the tool (81, 111, 123) along the tube (1);
- performing at least one inspection or maintenance operation on the outer surface (2) of the tube (1) with the tool (81, 111, 123), said operation including machining the outer surface (2) of the tube (1) using a machining tool (123) connected to the carrier (13), by gouging an damaged area of the outer surface (2) of the tube (1).

15. The method according to claim 14, **characterized in that** the method comprises one or more of the following steps:
- brushing the outer surface (2) of the tube (1) using a brushing tool (81) connected to the carrier (13);
- inspecting the outer surface (2) of the tube (1) using an inspection tool (111) connected to the carrier (13).
